(19) Europäisches Patentamt
European Patent Office
Office européen des brevets

(11) **EP 1 290 065 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: **01940510.9**

(22) Anmeldetag: **21.05.2001**

(51) Int Cl.[7]: **C08J 3/12**

(86) Internationale Anmeldenummer:
**PCT/EP2001/005781**

(87) Internationale Veröffentlichungsnummer:
**WO 2001/092379 (06.12.2001 Gazette 2001/49)**

(54) **THERMOPLASTISCHE FORMMASSEN MIT VERBESSERTEN OBERFLÄCHENEIGENSCHAFTEN SOWIE VERBESSERTER STRUKTURHOMOGENITÄT**

THERMOPLASTIC MOLDING COMPOUNDS WITH IMPROVED SURFACE PROPERTIES AND IMPROVED STRUCTURAL HOMOGENEITY

MATIERES MOULABLES THERMOPLASTIQUES A CARACTERISTIQUES DE SURFACE AMELIOREES ET A HOMOGENEITE STRUCTURALE AMLIOREE

(84) Benannte Vertragsstaaten:
**DE ES FR GB IT NL**

(30) Priorität: **02.06.2000 DE 10027334**
**05.10.2000 DE 10049206**

(43) Veröffentlichungstag der Anmeldung:
**12.03.2003 Patentblatt 2003/11**

(73) Patentinhaber: **LANXESS Deutschland GmbH**
**51368 Leverkusen (DE)**

(72) Erfinder:
- **EITEL, Alfred**
  **A-8222 St. Johann (AT)**
- **KÖNIG, Michael**
  **Dao, Shanghai 201204 (CN)**
- **ROSE, Dorothy**
  **41539 Dormagen (DE)**
- **HAUERTMANN, Hans-Bernhard**
  **41539 Dormagen (DE)**
- **ALBERTS, Heinrich**
  **51519 Odenthal (DE)**
- **WITTMANN, Dieter**
  **51375 Leverkusen (DE)**

(56) Entgegenhaltungen:
**EP-A- 0 272 441**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Homo- und/oder Copolymerisate und thermoplastische Formmassen mit verbesserter Oberflächen- und Strukturhomogenität sowie deren Verwendung und ein Verfahren zur Herstellung.

Thermoplastische Formmassen insbesondere solche, die Homo- und/oder Copolymerisate von einem oder mehreren ethylenisch ungesättigten Monomeren, Polycarbonate sowie Polyester enthalten, sind aus einer Vielzahl Veröffentlichungen bekannt Dies gilt insbesondere für den Einsatz von ABS-Polymerisaten. Nur beispielhaft sei auf folgende Dokumente hingewiesen: DE-A-19 616 968, WO 97/40 092, EP-A-728 811, EP-A-315 868 (= US-A-4 937 285), EP-A-0 174 493 (US-A-4 983 658), US-A-5 030 675, JA-59 202 240, EP-A-0 363 608 (= US-A-5 204 394), EP-A-0 767 204, EP-A-0 611 798, WO 96/27 600, EP-A-0 754 531.

Polymere weisen stets eine Teilchengrößenverteilung auf. Zur Verbesserung der Eigenschaften ist es wesentlich, bestimmte höhermolekulare Anteile zu entfernen. Diese erzeugen nämlich unerwünschte Oberflächeneffekte am Fertigteil und Inhomogenitäten, welche bei mechanischer Belastung zum Bruch der Teile führen.

Die Abtrennung von Inhomogenitäten in der Schmelze der Polymerisate führt nur zu unbefriedigenden Ergebnissen. Die Schmelzefiltration erfolgt zwangsläufig unter hohem Druck. Dabei können größere Inhomogenitäten verformt durch die Siebe hindurchgedrückt werden. Die Inhomogenität bleibt erhalten. (z.B. DE-A-4 227 137, US-A-5 498 334, US-A-5 407 586 und SU-A-1 723 588).

Eine bessere Möglichkeit ist, schon die Polymerlatices zu reinigen.

Aus dem Stand der Technik ist bekannt, Polymerlatices zur Entfernung von Verunreinigungen oder Grobanteilen zu filtrieren. So wird beispielsweise in Houben Weyl XIV/1, Makromolekulare Stoffe 1, Seiten 348 bis 356 (Georg Thieme Verlag, Stuttgart, 1961) sowie in DE-A-4 126 483 und US-A-4 747 959 die Filtration von Kautschuklatices beschrieben. Zusammenhänge mit den Oberflächeneigenschaften und der Strukturhomogenität sind aus diesem Stand der Technik nicht bekannt.

Die oben erwähnte Filtration gelingt großtechnisch bei den oft klebrigen, etwas elastischen und nicht sonderlich scherstabilen Teilchen der Latices nur unzureichend, da die Standzeiten der Filter nur kurz sind. So beträgt z.B. die Standzeit für ein Beutelfilter mit 250 μm Maschenweite zur Reinigung einer Latex nur Minuten bis wenige Stunden. Dann ist die Filterfläche so verkleinert, dass kein Durchfluss mehr erfolgt.

Die Behinderung der Filtration erfolgt durch Verstopfung der Löcher und einem auf dem Filter entstehenden Filterkuchen.

Eine Siebung von Polymerlatices ist bekannt. Bei der Siebung werden minimale Druckdifferenzen verwendet und die Gefahr von Neubildung von größeren Teilchen ist minimiert. Zur Siebung werden Maschinen eingesetzt, in welche die Latices über flache Siebe rinnen, welche bewegt werden, um eine Reinigung der Löcher zu bewirken. Es können auch Rundsiebe verwendet werden, welche zur Reinigung in eine Vibration versetzt werden. Auch bogenförmige Siebe werden vorgeschlagen.

Alle diese Siebe haben eine Reihe von Nachteilen: Sie sind sehr personalintensiv, da häufige Verstopfungen auftreten und die Selbstreinigung nicht funktioniert. Die Siebung muss dann angehalten werden und das Sieb muss mit verschiedenen Prozeduren gereinigt werden.

Ein weiterer gravierender Nachteil ist, dass die oben beschriebenen Siebe nicht in geschlossener Ausführung errichtet werden können, so dass durch ausgasende Restmonomere eine starke Kontamination der Umgebung auftritt. Auch bei einer Einhausung ist durch die häufige Reinigungsprozedur immer mit einer Umweltbelastung zu rechnen.

Aufgabe der vorliegenden Erfindung ist es, demgemäß Homo-und/oder Copolymerisate zur Verfügung zu stellen, die sich durch verbesserte Struktur- und Oberflächenhomogenität, verbesserte Eigenschaften, insbesondere hinsichtlich des Bruchverhaltens, der Thermostabilität und der Kerbschlagzähigkeit auszeichnen

Aufgabe der vorliegenden Erfindung ist weiterhin ein vorteilhaftes Verfahren zur Herstellung von Homo- und/oder Copolymerisate, das die oben genannten Nachteile nicht aufweist.

Es wurde gefunden, dass Homo- und/oder Copolymerisate von einem oder mehreren ethylenisch ungesättigten Monomeren ("Vinylmonomere"), die weniger als 400 Partikel bzw. Teilchen pro $m^2$ Oberfläche mit Durchmesser größer 200 μm enthalten, die erfindungsgemäßen Eigenschaften aufweisen.

Die Bestimmung der Partikel mit einem Durchmesser größer 200 μm pro $m^2$ Oberfläche erfolgt mit einem Folien-Qualitäts-Prüfgerät FS-3 der Firma OCS GmbH, Witten, Deutschland. (Siehe Herstellung und Prüfung der erfindungsgemäßen Formmassen)

Gegenstand der vorliegenden Erfindung sind daher Homo- oder Copolymerisate von einem oder mehreren ethylenisch ungesättigten Vinylmonomeren, dadurch gekennzeichnet, dass weniger als 400 Partikel einen Durchmesser größer 200 μm pro $m^2$ Oberfläche aufweisen.

Bevorzugt sind Homo- und/oder Copolymerisate, die dadurch gekennzeichnet sind, dass sie weniger als 200 Partikel pro $m^2$ mit einem Durchmesser > 200 μm, besonders bevorzugt dass sie weniger als 500 Partikel pro $m^2$ Oberfläche mit einem Durchmesser von 100 bis 200 μm, und insbesondere dass sie weniger als 2 500 Partikel pro $m^2$ Oberfläche mit einem Durchmesser von 50 bis100 μm enthalten.

Erfindungsgemäß werden die oben genannten Homopolymersisate oder Copolymerisate von ethylenisch ungesättigten Monomeren eingesetzt. Auch Mischungen verschiedener Homo- und/oder Copolymerisate sind geeignet.
Insbesondere kommen in Frage:

- kautschukfreie Vinylpolymerisate (A.1),
- kautschukhaltige Vinylpolymerisate, z.B. Pfropfpolymerisate von Vinylmonomeren auf einen Kautschuk (A.2),
- Mischungen aus kautschukfreien (A.1) und kautschukhaltigen (A.2) Vinylpolymerisaten.

Die ethylenisch ungesättigten Monomere sind vorzugsweise ausgewählt aus der Gruppe der einfach oder mehrfach ungesättigten Olefine (wie beispielsweise und bevorzugt Ethylen, Propylen, Chloropren, Butadien-1,3, Isopropen), Vinylacetat, Styrol, α-Methylstyrol, kernsubstituierte Styrole, Vinylcyanide (wie beispielsweise und bevorzugt Acrylnitril, Methacrylnitril), Maleinsäureanhydrid, N-substituierte-Maleinimide, $C_1$-$C_8$-Alkylacrylate und -Methacrylate, (wie beispielsweise und bevorzugt Methylacrylat und Methylmethacrylat).
Besonders bevorzugte Vinylpolymerisate A.1 sind (Co)Polymerisate aus einerseits Styrol, α-Methylstyrol, kernsubstituiertem Styrol oder Mischungen (A.1.1) und andererseits Acrylnitril, Methacrylnitril, (Meth)Acrylsäure-$C_1$-$C_8$-Alkylester, Maleinsäureanhydrid, N-substituiertes Maleinimid oder Mischungen (A.1.2).
Die (Co)Polymerisate können vorzugsweise 50 bis 98 Gew.-% A.1.1 und 50 bis 2 Gew.-% A.1.2 enthalten.
Ganz besonders bevorzugte (Co)Polymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.
Die Homo- und Copolymerisate können durch radikalische Polymerisation, insbesondere durch Emulsions-, Suspensions-, Lösungs- oder Massepolymerisation hergestellt werden. Die (Co)Polymerisate A.1 besitzen vorzugsweise Molekulargewichte $\overline{M}_w$ (Gewichtsmittel, ermittelt durch Lichtstreuung oder Sedimentation) von 15.000 bis 200.000.
Weitere besonders bevorzugte (Co)Polymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus den entsprechenden Monomeren hergestellt werden können. Ihre Zusammensetzung kann innerhalb weiter Grenzen variiert werden. Bevorzugt enthalten sie 5 bis 25 Gew.% Maleinsäureanhydrideinheiten.
Anstelle von Styrol können diese Polymerisate auch kemsubstituierte Styrole, wie p-Methylstyrol, Vinyltoluol, 2,4-Dimethylstyrol und andere substituierte Styrole, wie α-Methylstyrol, enthalten.
Die kautschukhaltigen Vinylpolymerisate A.2 umfassen z.B. Pfropf(co)polymerisate mit kautschukelastischen Eigenschaften, die im wesentlichen aus mindestens zwei der folgenden Monomeren erhältlich sind: Chloropren, Butadien-1,3, Isopropen, Styrol, α-Methylstyrol, Acrylnitril, Ethylen, Propylen, Vinylacetat, $C_1$-$C_8$-Alkylacrylate und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Im allgemeinen sind die Polymerisate A.2 partiell vernetzt und besitzen im allgemeinen Gelgehalte von über 20 Gew.-%, vorzugsweise über 40 Gew.-%.
Bevorzugte kautschukartige Vinylpolymerisate A.2 sind Pfropfpolymerisate aus:

A.2.1 5 bis 95, vorzugsweise 30 bis 80, Gew.-Teilen, einer Mischung aus

A.2.1.1 50 bis 95 Gew.-Teilen Styrol, α-Methylstyrol, halogen- oder methylkernsubstituierten Styrolen, (Meth)Acrylsäure-$C_1$-$C_8$-Alkylester oder Mischungen dieser Verbindungen und

A.2.1.2 5 bis 50 Gew.-Teilen Acrylnitril, Methacrylnitril, (Meth)Acrylsäure-$C_1$-$C_8$-Alkylester, Maleinsäuranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70 Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-A 1 694173 (= US-A-3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-A 2 348 377 (= US-A 3 919 353) beschrieben sind.

Besonders bevorzugte Polymerisate A.2 sind ABS-Polymerisate, wie sie z.B. in der DE-A 2 035 390 (= US-A-3 644 574) und in der DE-A 2 248 242 (= GB-A 1 409 275) beschrieben sind.

Erfindungsgemäß besonders bevorzugt sind Pfropfkautschuke mit Kautschukgehalten von mindestens 50 Gew.%, vorzugsweise mindestens 55 Gew.-%.

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, Acrylsäureester oder Methacrylsäureester und 50 bis 90, vorzugsweise 65 bis 80 Gew.-%, bezogen auf Gemisch, Styrol oder kemsubstituierte Styrole oder eine Mischung daraus (als Pfropfauflage A.2.1) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2).

Im allgemeinen beträgt der Gelanteil der Pfropfgrundlage β mindestens 20 Gew.-% (in Toluol gemessen), der Pfropfgrad G 0,15 bis 0,95. Der Pfropfgrad G kann auch 0,15 bis 0,55 betragen.

Acrylsäureester bzw. Methacrylsäureester α sind Ester der Acrylsäure oder Methacrylsäure und einwertiger Alkohole mit 1 bis 8 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C als Pfropfgrundlage A.2.2 und

δ. 10 bis 80 Gew.-%, bezogen auf A.2, mindestens eines polymerisierbaren, ethylenisch ungesättigten Monomeren, als Pfropfmonomere A.2.1.

Die Acrylatkautschuke der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_{12}$-Alkylester, vorzugsweise $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-Alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-A 37 04 657, DE-A 37 04 655, DE-A 36 31 540 und DE-A 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A.2 können nach bekannten Verfahren wie Masse-, Suspensions-, Emulsions- oder Masse-Suspensionsverfahren hergestellt werden.

Überraschend wurde gefunden, dass ohne die beschriebenen Nachteile bei der Emulsions- und/oder Suspensionspolymerisation eine Absiebung der Grobanteile des entstehenden Polymers mit einer geeigneten Form von Trommelsieben gelingt.

Gegenstand der Erfindung ist daher, wie bereits erwähnt, ein vorteilhaftes Verfahren zur Herstellung von Homo-und/oder Copolymerisaten mittels Emulsions- und/oder Suspensionspolymerisation, die weniger als 400 Partikel mit größer 200 μm pro $m^2$ Oberfläche enthalten, dadurch gekennzeichnet, dass zur Reinigung der Polymere ein Trommelsieb mit einer mittleren Maschenweite von ≤ 200 μm verwendet wird.

Der zu reinigende wässrige Polymerstrom wird dabei in eine langsam oder taktweise rotierende, mit geeignetem Siebgewebe bespannten Trommel geleitet. Eine Standdifferenz zwischen Innen- und Außenseite erzeugt eine hydrostatische Druckdifferenz, die als treibendes Gefälle für die Filtration dient. Zurückbleibende Grobanteile (bestimmt durch Maschenweite des Siebes) werden durch die Drehbewegung der Trommel vom Filtrationsort wegtransportiert und im oberen Teil der Trommel mittels einer Besprühung auch unter Druck durch geeignete Spülmedien und geeigneter Abschaber entfernt.

Eine Verstopfung der Sieblöcher ist nicht zu beobachten.

Trommelsiebe werden üblicherweise für die Wäsche und Klassierung von Kies oder für Spezialsiebungen in Kläranlagen oder Recyclinganlagen verwendet.

Durch das erfindungsgemäße Verfahren werden Homo-und/oder Copolymerisate erhalten, die weniger als 400 Partikel mit größer 200 μm pro $m^2$ Oberfläche enthalten. Besonders bevorzugt sind Produkte mit weniger als 200 Partikel mit >200 μm pro $m^2$ Oberfläche.

Die Siebung des Polymerstroms kann halbkontinuierlich oder vollkontinuierlich erfolgen.

Erfindungsgemäß werden die Homo-und/oder Copolymerisate mittels Siebung über ein Trommelsieb in der unten beschriebenen Weise erhalten.

Erfindungsgemäß wird die Siebung über Trommelsiebe (10), Fig. 1) mit einer mittleren Maschenweite von ≤ 200 μm bevorzugt. Besonders bevorzugt sind Maschenweiten von ≤ 150 μm. Höchst bevorzugt sind Maschenweiten von ≤ 100 μm.

Für die Siebe kommen alle bekannten Materialien in Betracht. Hierzu zählen beispielsweise Metalle oder Gewebe aller Art. Trommelsiebe sind bekannt. Als Trommelsiebe können alle bekannten Trommelsiebe eingesetzt werden, die die erforderlichen Maschenweiten aufweisen. Die mittels des erfindungsgemäßen Verfahrens hergestellten erfindungsgemäßen Homo-und/oder Copolymerisate zeichnen sich durch eine signifikante Verbesserung ihrer mechanischen Eigenschaften aus. Insbesondere sind die Oberflächen, die Thermostabilität und die Kerbschlagzähigkeit in einem nicht vorhersehbaren Maß verbessert.

Das erfindungsgemäße Verfahren ist in Figur 1 und 2 dargestellt und läuft wie folgt ab:

> Der zu filtrierende Polymerstrom wird in das Innere der Siebtrommel geleitet. Durch einen geringen Füllhöhenunterschied zwischen Trommelinnen- (2) und Trommelaußenraum (3) wird eine hydrostatische Druckdifferenz erzeugt, die einen Durchtritt von Polymerstrom durch das Filtermedium bewirken. Im Polymerstrom enthaltene Feststoffe bleiben auf der Siebfläche (4) zurück und können von dort aus der Trommel ausgetragen werden.

Um eine Schädigung des Polymers oder eine Verstopfung durch Koagulation der Siebfläche zu verhindern, darf der Füllhöhenunterschied nicht zu groß werden. Der Grenzwert für den Füllstandsunterschied ist gegeben durch die für das jeweilige Polymer maximal verträglichen Scherkräfte beim Durchtritt durch das Siebgewebe. Der Füllhöhenunterschied wird über prozessleittechnische Messeinrichtung erfasst. Überschreitet der Füllhöhenunterschied einen vorgegebenen Wert von ca. 10 cm, wird die Trommel mittels eines Antriebes mit 1-60 $Umin^{-1}$ gedreht. Auf der Siebfläche abgelagerte Feststoffe fallen während der Drehbewegung in eine im Trommelinneren angebrachte mechanische Austragshilfe (Fig. 2, (5)), aus der sie in Abhängigkeit von der Konsistenz ausfließen oder mittels dieser mechanischen Austragshilfe ausgetragen und entsorgt werden können.

Im Trommelinneren sind geeignet geformte Bleche (6) angebracht, die das Mitnehmen der Feststoffe unterstützen.

Wird durch diese Drehbewegung der Sollwert der Füllhöhendifferenz nicht erreicht, wird das Sieb mittels einer über der Trommel angebrachten Reihe von Wasserdüsen (Fig. 2 (7)) gereinigt.

Die hydrostatische Druckdifferenz zwischen Roh- und Reinseite des Filters kann zu spezifikationsschädlichen Leckströmen führen. Daher wird die auf dem gesamten Umfang abdichtende Trommeldichtung mit zwei Abdichtungen

(8) versehen, zwischen denen sich ein Kontrollraum (9) befindet, in den Leckstrom fließt, um die gereinigte Emulsion nicht zu verunreinigen (kontaminieren).

Die mittels der beschriebenen Siebung hergestellten erfindungsgemäßen Homo-und/oder Copolymerisate zeichnen sich durch eine signifikante Verbesserung ihrer mechanischen Eigenschaften aus. Insbesondere sind die Reißdehnung, Oberflächeneigenschaften, der Strukturhomogenität und damit die Kerbschlagzähigkeit in einem nicht vorhersehbaren Maß verbessert.

Erfindungsgemäß können die beschriebenen Homo- bzw. Copolymerisate teilweise durch andere Thermoplaste ersetzt werden. Die anderen Thermoplaste sind vorzugsweise ausgewählt aus mindestens einem Thermoplasten der Gruppe der Polycarbonate, Polyestercarbonate, Polyester und übliche (Co)Polymerisate gemäß der oben beschriebenen Komponente A.1, jedoch ohne den erfindungsgemäßen Grrobanteil von Teilchen.

Weiterhin können die erfindungsgemäßen Homo- und/oder Copolymerisate und deren Mischung mit anderen Thermoplasten weitere Zusatzstoffe ausgewählt aus mindestens einem der Gruppe der Flammschutzmittel, Anti-Dripping-Mittel, feinstteilige anorganische Verbindungen und Füll- und Verstärkungsstoffe sowie übliche Additive (siehe hinten) enthalten.

Mischungen aus kautschukfreien (A.1) und kautschukhaltigen Vinylpolymerisaten (A.2) enthalten vorzugsweise

a) 0,5 bis 90 Gew.-Teile, vorzugsweise 10 bis 80 Gew.-Teile, insbesondere 20 bis 70 Gew.-Teile A.1 und

b) 10 bis 99,5 Gew.-Teile, vorzugsweise 20 bis 90 Gew.-Teile, insbesondere 80 bis 30 Gew.-Teile A.2 (bezogen auf A.1 und A.2)

wobei mindestens eine Komponente A1. oder A.2 dadurch gekennzeichnet ist, dass die Polymerisate A.1oder A.2 weniger als 400 Partikel pro $m^2$ Oberfläche mit einem Durchmesser größer 200 µm enthalten bzw. die oben angegebenen bevorzugten Defnitionen haben.

Weiterhin sind erfindungsgemäß Mischungen auch solche die A.1) bzw. A.2) bzw. ein Gemisch aus A.1) und A.2) sowie andere Thermoplaste und gegebenenfalls weitere Zusatzstoffe enthalten. Andere Thermoplasten sind vorzugsweise ausgewählt aus der Gruppe der Polycarbonate, Polyestercarbonate, Polyalkylenterephthalate, Polyamide oder Mischungen hieraus.

Die Zusammensetzungen enthalten vorzugsweise

c). 10 bis 90 Gew.-Teile, insbesondere 20 bis 85 Gew.-Teile, ganz besondere bevorzugt 35 bis 80 Gew.-Teile Polycarbonat, Polyestercarbonat, Polyalkylenterephthalat oder Gemische hieraus oder Polyamid,

d) 90 bis 10 Gew.-Teile, vorzugsweise 80 bis 15 Gew.-Teile, insbesondere 60 bis 20 Gew.-Teile A.1 oder A.2 oder Mischungen daraus,

wobei die Summe der Gewichtsteile aller Komponenten 100 ergibt,
mit der Maßgabe, dass mindestens eine Komponente A1. oder A.2 weniger als 400 Partikel pro $m^2$ Oberfläche mit einem Durchmesser größer als 200 µm enthalten bzw. die oben angegebenen bevorzugten Definitionen aufweisen.

Geeignete Polycarbonate und/oder Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-OS 2 232 877, DE-A 2 703 376, DE-A 2 714 544, DE-A 3 000 610, DE-A 3 832 396; zur Herstellung aromatischer Polyestercarbonate z.B. DE-A 3 077 934).

Geeignete Polyalkylenterephthalate und Polycarbonate sind beispielsweise in DE-A 4 436 776 (=US-A 5 658 974) beschrieben.

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I)

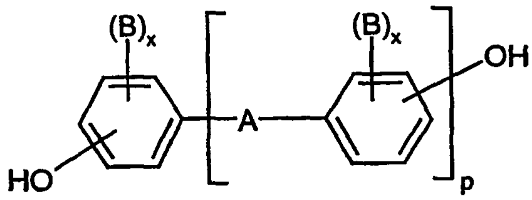

wobei

A eine Einfachbindung, $C_1$-$C_5$-Alkylen, $C_2$-$C_5$-Alkyliden, $C_5$-$C_6$ -Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können,
oder ein Rest der Formel (II) oder (III)

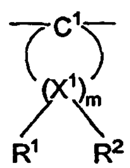

(II)

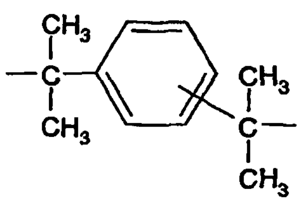

(III)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^1$ und $R^2$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^1$ und $R^2$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis-(3-chlor-4-hydroxyphenyl)-propan, 2,2-Bis-(3,5-dichlor-4-hydroxyphenyl)-propan oder

2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($\bar{M}_W$, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxan-haltiger Copolycarbonate wird z.B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis-(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20: 1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (s. dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten, 2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

Die Polycarbonate können auch teilweise durch Polyester ersetzt werden.

Bevorzugte Polyester sind Polyalkylenterephthalate. Diese sind Reaktionsprodukte von aromatischen Dicarbonsäuren (oder ihren reaktionsfähigen Derivaten, z.B. Dimethylestem oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1-4-Di-(β-hydroxyethoxyphenyl)-propan, 2,4-Dihydroxy-1,1,3,3-tetmmethylcyclobutan, 2,2-Bis-(3-β-hydroxyethoxyphenyl)-propan und 2,2-Bis-(4-hydroxypropoxyphenyl)-propan (DE-A 2 407 647, 2407776, 2 715 932).

Die Polyalkylenterephthalate können durch Einbau relativ kleiner Mengen 3- oder 4-wertiger Alkohole oder 3- oder 4-basiger Carbonsäuren, wie sie in DE-A 1 900 270 und US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet Weiterhin kommen teilkristalline Polyamide in Betracht, deren Säurekomponente ganz oder teilweise aus Terephthalsäure und/oder Isophthalsäure und/öder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 C-Atomen im Ring, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexyl-methan, 3-Aminomethyl-3,5,5-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus

| | |
|---|---|
| 70 bis 99 mol-% | des 4,4'-Diamino-Isomeren |
| 1 bis 30 mol-% | des 2,4'-Diamino-Isomeren |
| 0 bis 2 mol-% | des 2,2'-Diamino-Isomeren |

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Ferner können die erfindungsgemäßen thermoplastischen Formmassen Flammschutzmittel enthalten. Dabei sind sowohl halogenhaltige als auch halogenfreie Verbindungen geeignet. Die Flammschutzmittel werden im allgemeinen in einer Menge von 0,1 bis 35, vorzugsweise 0,5 bis 30 Gew.-Teilen, bezogen auf die Summe der Komponenten A-D, zugesetzt werden.

Geeignete Halogenverbindungen sind organische Chlor- und/oder Bromverbindungen, die bei der Herstellung und Verarbeitung der erfindungsgemäßen Formmassen stabil sind, so dass keine korrosiven Gase freigesetzt werden und die Wirksamkeit dadurch nicht beeinträchtigt wird.

Halogenhaltige Verbindungen sind beispielsweise

1. Chlorierte und bromierte Diphenyle, wie Octachlordiphenyl, Decachlordiphenyl, Octabromdiphenyl, Decabromdiphenyl.

2. Chlorierte und bromierte Diphenylether, wie Octa- und Decachlordiphenylether und Octa- und Decabromdiphenylether.

3. Chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor- und N,N'-Ethylen-bis-tetrabromphthalimid, N-Methyltetrachlor- und N-Methyltetrabromphthalimid.

4. Chlorierte und bromierte Bisphenole, wie 2,2-Bis-(3,5-di-chlor-4-hydroxyphenyl)-propan und 2,2-Bis-(3,5-dibrom-4-hydroxyphenyl)-propan.

5. 2,2-Bis-(3,5-di-chlor-4-hydroxyphenyl)-propan-Oligocarbonat und 2,2-Bis-(3,5-di-brom-4-hydroxyphenyl)-propan-Oligocarbonat mit einem mittleren Polykondensationsgrad von 2 bis 20.

Bromverbindungen werden gegenüber den Chlorverbindungen bevorzugt und halogenfreie Verbindungen gegenüber diesen.

Vorzugsweise als Flammschutzmittel geeignet sind alle üblicherweise hierfür verwendeten Phosphorverbindungen, insbesondere Phosphinoxide und Derivate von Säuren des Phosphors und Salze von Säuren und Säurederivaten des Phosphors.

Bevorzugt werden Derivate (z.B. Ester) von Säuren des Phosphors und deren Salze, wobei Säuren des Phosphors, Phosphorsäure, Phosphonsäure, Phosphinsäure, phosphorige Säure, auch jeweils in dehydratisierter Form einschließt, Salze bevorzugt Alkali-, Erdalkali- und Ammoniumsalze dieser Säuren sind und auch deren Derivate (beispielsweise teilveresterter Säuren) eingeschlossen sind.

Als Phosphorverbindungen geeignet sind z. B. Metallverbindungen von Monoestern der Phosphorsäure der Formel (IVa) und (IVb),

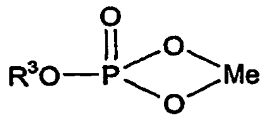

(IVa)

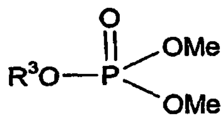

(IVb)

oder Metallverbindungen von Diestern der Phosphorsäure gemäß Formel (V)

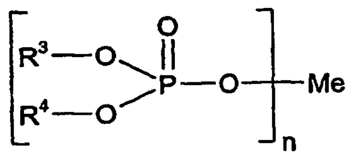

(V)

worin

R³ und R⁴ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten, oder im Falle der Formel (V) $R^3$ und $R^4$ gemeinsam eine Alkyl-Kette bilden,

Me für ein Metall, ausgewählt aus der 1. und 3. Hauptgruppe und VIII, IB und IIB der Nebengruppe des Periodensystems steht,
und

n durch die Wertigkeit des Metallions bestimmt wird.

$R^3$ und $R^4$ stehen unabhängig voneinander vorzugsweise für gegebenenfalls halogeniertes (vorzugsweise durch Chlor und/oder Brom) $C_1$-$C_{15}$-, insbesondere $C_1$-$C_{10}$-Alkyl, jeweils gegebenenfalls durch Halogen (vorzugsweise Chlor und/oder Brom) und/oder $C_1$-$C_6$-, insbesondere $C_1$-$C_4$-Alkyl, insbesondere Methyl, Ethyl, n-, isoPropyl, substituiertes Cyclopentyl, Cyclohexyl, Phenyl, Naphthyl, Phenyl-$C_1$-$C_4$-alkyl (wie Benzyl).

Als Metalle Me sind Metalle aus der 2. und 3. Hauptgruppe und der II. Nebengruppe bevorzugt.

Besonders bevorzugt steht Me für Mg, Ca, Ba, Bor, Al oder Zn.

Zur Herstellung der erfindungsgemäßen Metallverbindungen der Phosphorsäureester sind literaturbekannte Verfahren wie beispielsweise das Umesternngsverfahren ausgehend von Triestern der Phosphorsäure oder das Säurehalogenid-Verfahren, ausgehend von Phosphorylchlorid geeignet (EP-A-0 801 116; J. Org. Chem. 1978, Vol. 43, Nr. 1, S. 24-31).

Weiterhin sind als Flammschutzmittel Phosphorverbindungen der Formel (VI) geeignet,

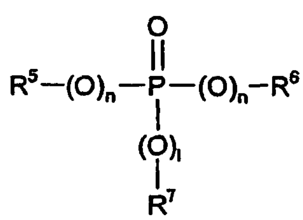

(VI),

in der

$R^5$, $R^6$ und $R^7$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und

"n" und "1" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356 beschrieben.

Gegebenenfalls halogenierte $C_1$-$C_8$-Alkylreste gemäß (VI) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$-oder $C_6$-Cycloalkyle gemäß (VI) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VI) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen $R^5$, $R^6$ und $R^7$ unabhängig voneinander für Methyl, Ethyl, Butyl, Octyl, Phenyl, Kresyl, Cumyl oder Naphthyl. Besonders bevorzugt stehen $R^5$, $R^6$ und $R^7$ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

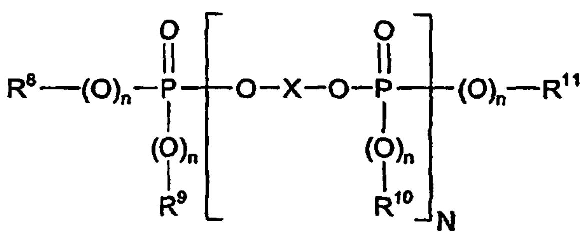

(VII)

In der Formel stehen $R^8$, $R^9$, $R^{10}$ und $R^{11}$, unabhängig voneinander für jeweils gegebenenfalls halogeniertes $C_1$-$C_8$-Alkyl, $C_5$-$C_6$-Cycloalkyl, $C_6$-$C_{20}$-Aryl oder $C_7$-$C_{12}$-Aralkyl.

Bevorzugt stehen $R^8$, $R^9$, $R^{10}$ und $R^{11}$ unabhängig voneinander für $C_1$-$C_4$-Alkyl, Phenyl, Naphthyl oder Phenyl-$C_1$-$C_4$-alkyl. Die aromatischen Gruppen $R^8$, $R^9$, $R^{10}$ und $R^{11}$ können ihrerseits mit Halogen- und/oder Alkylgruppen, vorzugsweise Chlor, Brom und/oder $C_1$-$C_4$-Alkyl substituiert sein. Besonders bevorzugte ArylReste sind Kresyl, Phenyl, Xylenyl, Propylphenyl oder Butylphenyl sowie die entsprechenden bromierten und chlorierten Derivate davon.

X in der Formel (VII) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Resorcin oder Hydrochinon oder deren chlorierte oder bromierte Derivaten.

n in der Formel (VII) kann, unabhängig voneinander, 0 oder 1 sein, vorzugsweise ist n gleich 1.

N steht für Werte von 0 bis 30, vorzugsweise für einen durchschnittlichen Wert von 0,3 bis 20 , besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (VI) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VII) weisen durchschnittliche N-Werte von 0,3 bis 20, bevorzugt 0,5 bis 10, insbesondere von 0,5 bis 6 auf.

Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Zu den erfindungsgemäß einsetzbaren Phosphorverbindungen gehören auch lineare Phosphazene gemäß Formel (VIII) und cyclische Phosphazene gemäß Formel (IX)

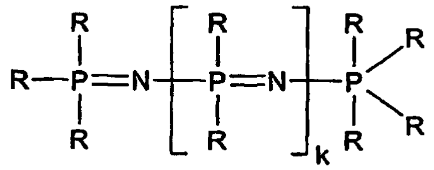

(VIII),

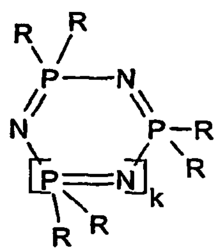

(IX),

worin

R jeweils gleich oder verschieden ist und für Amino, jeweils gegebenenfalls halogeniertes, vorzugsweise mit Fluor halogeniertes $C_1$- bis $C_6$-Alkyl oder $C_1$-$C_8$-Alkoxy, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl, vorzugsweise Phenyl oder Naphthyl, $C_6$-bis $C_{20}$-Aryloxy, vorzugsweise Phenoxy, Naphthyloxy, oder $C_7$-$C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien genannt:

Propoxyphosphazen, Phenoxyphosphazen, Methylphenoxyphosphazen, Aminophosphazen und Fluoralkylphosphazene.
Bevorzugt ist Phenoxyphosphazen.

Die Phosphazene können allein oder als Mischung eingesetzt werden. Der Rest R kann immer gleich sein oder 2 oder mehr Reste in den Formeln (VIII) und (IX) können verschieden sein.

Die Phosphazene und deren Herstellung sind beispielsweise in EP-A-728 811, DE-A-1 961 668 und WO 97/40 092 beschrieben.

Weiterhin können die erfindungsgemäßen Formmassen vorzugsweise 0,05 bis 5, besonders bevorzugt 0,1 bis 1, insbesondere 0,1 bis 0,5 Gew.-Teile, bezogen auf die Gesamtmasse, fluorierte Polyolefine enthalten. Geeignete fluorierte Polyolefine sind hochmolekular und besitzen Glasübergangstemperaturen von über -30°C, in der Regel von über 100°C. Ihre Fluorgehalte betragen vorzugsweise 65 bis 76, insbesondere 70 bis 76 Gew.-%. Ihre mittlere Teilchendurchmesser $d_{50}$ betragen im allgemeinen 0,05 bis 1.000, vorzugsweise 0,08 bis 20 µm. Im allgemeinen haben die fluorierten Polyolefine E eine Dichte von 1,2 bis 2,3 g/cm³.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Graw-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxydisulfat bei Drücken von 7 bis 71 kg/cm$^2$ und bei Temperaturen von 0 bis 200°C, vorzugsweise bei Temperaturen von 20 bis 100°C. (Nähere Einzelheiten siehe z.B. US-A 2 393 967.) Je nach Einsatzform kann die Dichte dieser Materialien zwischen 1,2 und 2,3 g/cm$^3$, die mittlere Teilchengröße zwischen 0,05 und 1 000 µm liegen.

Bevorzugte fluorierte Polyolefine sind Tetrafluorethylenpolymerisate. Sie haben mittlere Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate C eingesetzt.

Geeignete, in Pulverform einsetzbare fluorierte Polyolefine sind Tetrafluorethylenpolymerisate mit mittleren Teilchendurchmessern von 100 bis 1.000 µm und Dichten von 2,0 g/cm$^3$ bis 2,3 g/cm$^3$.

Die erfindungsgemäßen thermoplastischen Formmassen können ferner feinstteilige anorganische Verbindungen enthalten. Vorzugsweise enthalten die erfindungsgemäßen Formmassen 0,1 bis 50 Gew.-Teile, vorzugsweise 0,1 bis 10 Gew.-Teile, bezogen auf die Gesamtmenge. Diese können vorzugsweise aus Verbindungen eines oder mehrerer Metalle der 1. bis 5. Hauptgruppe oder 1. bis 8. Nebengruppe des Periodensystems, bevorzugt 2. bis 5. Hauptgruppe oder 4. bis 8. Nebengruppe, besonders bevorzugt 3. bis 5. Hauptgruppe oder 4. bis 8. Nebengruppe mit mindestens einem Element ausgewählt aus der Gruppe bestehend aus Sauerstoff, Schwefel, Bor, Phosphor, Kohlenstoff, Stickstoff, Wasserstoff und Silicium bestehen.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$, WC, ZnO, $Al_2O_3$, AlO(OH), $ZrO_2$, $Sb_2O_3$, $SiO_2$, Eisenoxide, $Na_2SO_4$, Si, $BaSO_4$, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, die Cofällung von Dispersionen der oben beschriebenen Komponenten der erfindungsgemäßen thermoplastischen Formmassen mit Dispersionen, Suspensionen, Pasten oder Solen der feinstteiligen anorganischen Materialien dar.

Die erfindungsgemäßen Formmassen können ferner übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemässen Formmaßen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium-Silikaten Vormischungen herzustellen.

Die erfindungsgemäßen thermoplastischen Formmassen eignen sich aufgrund ihrer sehr guten mechanischen Eigenschaften zur Herstellung von Formkörpern jeglicher Art, insbesondere solchen mit erhöhten Anforderungen

an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen wie Monitore, Drucker, Kopierer, oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahraeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Im folgenden wird die Erfindung unter Bezugnahme auf die Beispiele näher beschrieben:

## Beispiele

### Komponente A

#### A1 (Vergleich - Ohne Trommelsiebung)

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,3 µm), hergestellt durch Emulsionspolymerisation.

Ohne Trommelsiebung wird die Polymerlatex in der üblichen Weise (thermisch bzw. mit Salzen bzw. mit Säuren) gefällt und das Fällgut abgetrennt und getrocknet.

Gemäß der unten beschriebenen Herstellung der Formmassen wird die Qualität von Al überprüft (die Rezeptur ist in Tabelle 1 beschrieben).
Die Oberfläche wies 1000 Partikel mit >200µm pro $m^2$ auf.

#### A2 (Vergleich - Ohne Trommelsiebung)

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,35 µm), hergestellt durch Emulsionspolymerisation.

Ohne Trommelsiebung wird die Polymerlatex in der üblichen Weise (thermisch bzw. mit Salzen bzw. mit Säuren) gefällt und das Fällgut abgetrennt und getrocknet.

Gemäß der unten beschriebenen Herstellung der Formmassen wird die Qualität von A2 überprüft (die Rezeptur ist in Tabelle 1 beschrieben).
Die Oberfläche wies 900 Partikel mit >200µm pro $m^2$ auf.

#### A3 (erfindungsgemäß)

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,3 µm), hergestellt durch Emulsionspolymerisation.

Der Latex wird über ein Trommelsieb geleitet. Der Durchsatz beträgt 9 000 kg/h. Die Oberfläche der Siebtrommel beträgt 4 $m^2$, die Maschenweite der Siebe 50 µm.

Die gesiebte Polymerlatex wird in der üblichen Weise (thermisch, sauer oder mit Salzen) gefällt, das Fällgut abgetrennt und getrocknet.

Gemäß der unten beschriebenen Herstellung der Formmassen wird die Qualität von A3 überprüft (die Rezeptur ist in Tabelle 1 beschrieben).
Die Oberfläche wies 100 Partikel mit > 200µm pro $m^2$ auf.

**A4 (erfindungsgemäß)**

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,35 µm), hergestellt durch Emulsionspolymerisation.

Der Latex wird gemäß A3 über ein Trommelsieb geleitet. Der Durchsatz beträgt 15 000 kg/h, die Oberfläche der Trommel 4 $m^2$, die Maschenweite der Siebe 100 µm.

Die gesiebte Polymerlatex wird in der üblichen Weise (thermisch, sauer oder mit Salzen) gefällt, das Fällgut abgetrennt und getrocknet.

Gemäß der unten beschriebenen Herstellung der Formmassen wird die Qualität von A4 überprüft (die Rezeptur ist in Tabelle 1 beschrieben).
Die Oberfläche wies 150 Partikel mit > 200µm pro $m^2$ auf.

**Komponente B**

Lineares Polycarbonat auf der Basis Bisphenol A mit einer relativen Lösungsviskosität von 1,252 gemessen in $CH_2Cl_2$ als Lösungsmittel bei 25°C und in einer Konzentration von 0,5 g/100 ml.

**Komponente C**

Styrol/Acrylnitril-Copolymerisat mit einem Styrol/Acrylnitril-Verhältnis von 72:28 und einer Grenzviskosität von 0.55 dl/g (Messung in Dimethylformamid bei 20°C).

**Herstellung und Prüfung der erfindungsgemäßen Formmassen**

Das Mischen der Komponenten A-C erfolgt auf einem 3-1-Innenkneter.
Die Formmassen wurden auf einem Extruder verarbeitet, zu Bändchen mit 50 bis 70 mm Breite und 200 µm Dicke extrudiert und mit einem Folien-Qualitäts-Prüfgerät FS-3 der Firma OCS GmbH, Witten, Deutschland auf Oberflächenhomogenität geprüft. Die Formkörper werden auf einer Spritzgießmaschine Typ Arburg 270 E bei 260°C hergestellt.

Die Bestimmung der Kerbschlagzähigkeit $A_k$ erfolgt nach Methode ISO 180/1A an Stäben der Abmessung 80x10x4 mm bei Raumtemperatur.

Die Reißdehnung DR wird im Rahmen der Bestimmung des Zug-E-Moduls nach Methode ISO 527 an F3 Schulterstäben bestimmt.

Tabelle 1:

| Zusammensetzungen und Eigenschaften der ABS-Formmassen | | | | |
|---|---|---|---|---|
| **Beispiel** | **1** | **2 (Vergleich)** | **3** | **4 (Vergleich)** |
| **Komponenten** Gewichtsanteile | | | | |
| A1 | - | 40 | - | - |
| A2 | - | - | - | 40 |
| A3 | 40 | - | - | - |
| A4 | - | - | 40 | - |
| C | 60 | 60 | 60 | 60 |
| **Eigenschaften** | | | | |
| $A_k$ (ISO 180/1 A) kJ/$m^2$ | 19,0 | 14,6 | 21,1 | 19,5 |
| DR(ISO 527) % | 17,4 | 8,6 | 9,6 | 6,7 |
| Partikel/$m^2$ | 100 | 1000 | 150 | 900 |

Tabelle 2:

| Zusammensetzung und Eigenschaften der Polycarbonat-ABS-Formmassen | | | | |
|---|---|---|---|---|
| **Beispiel** | **5 (Vergleich)** | **6** | **7 (Vergleich)** | **8** |
| **Komponenten** Gewichtsanteile | | | | |
| A1 | 24,0 | - | - | - |
| A2 | - | - | 24,0 | - |
| A3 | - | 24,0 | - | - |
| A4 | - | - | - | 24,0 |
| B | 43,0 | 43,0 | 43,0 | 43,0 |
| C | 33,0 | 33,0 | 33,0 | 33,0 |
| | | | | |
| **Eigenschaften** | | | | |
| $A_k$ (ISO 1801 A) kJ/$m^2$ | 81,1 | 90,0 | 72,1 | 92,8 |
| DR (ISO 527) % | 35,5 | 80,2 | 15,8 | 79,5 |
| Partikel /$m^2$ | 1000 | 100 | 900 | 150 |

**Patentansprüche**

1. Verfahren zur Herstellung von Homo- und/oder Copolymerisaten von einem oder mehreren ethylenisch ungesättigten Monomeren mittels Emulsions- und/oder Suspensionspolymerisation, die weniger als 400 Teilchen mit einem Durchmesser größer 200 µm pro $m^2$ Oberfläche enthalten, wobei die Bestimmung der Teilchen mit einem Durchmesser größer 200 µm pro $m^2$ Oberfläche mit einem Folien-Qualitäts-Prüfgerät FS-3 der Firma OCS GmbH, Witten, Deutschland erfolgt, **dadurch gekennzeichnet, dass** der zu reinigende wässrige Polymerstrom in ein langsam oder taktweise rotierendes Trommelsieb mit einer mittleren Maschenweite von ≤ 200 µm geleitet wird und zurückbleibende Grobanteile durch die Drehbewegung der Trommel vom Filtrationsort wegtransportiert und im oberen Teil der Trommel mittels einer Besprühung unter Druck durch geeignete Spülmedien und geeigneter Abschaber entfernt werden.

2. Verfahren nach Anspruch 1, **dadurch gekennzeichnet, dass** das Trommelsieb eine mittlere Maschenweite von ≤ 150 µm hat.

3. Homo- und/oder Copolymerisate von einem oder mehreren ethylenisch ungesättigten Monomeren, **dadurch gekennzeichnet, dass** sie nach dem Verfahren gemäß Anspruch 1 hergestellt werden.

4. Homo- und/oder Copolymerisate nach Anspruch 3, **dadurch gekennzeichnet, dass** sie weniger als 200 Teilchen mit einem Durchmesser größer 200 µm pro $m^2$ Oberfläche enthalten.

5. Therrrioplastische Formmassen, **dadurch gekennzeichnet, dass** sie Homo- und/oder Copolymerisate nach Anspruch 3 enthalten.

6. Thermoplastische Formmassen nach Anspruch 5, **dadurch gekennzeichnet, dass** sie Pfropfpolymerisate harzbildender Vinylpolymere auf einem Kautschuk enthalten.

7. Thermoplastische Formmassen nach einem der Ansprüche 5 oder 6, **dadurch gekennzeichnet, dass** sie thermoplastische Polycarbonate, Polyestercarbonate, Polyester oder Mischungen hieraus oder Polyamid enthalten.

8. Thermoplastische Formmassen nach einem der Ansprüche 5 bis 7, **dadurch gekennzeichnet, dass** sie Flammschutzmittel enthalten.

9. Thermoplastische Formmassen nach einem der Ansprüche 5 bis 8, **dadurch gekennzeichnet, dass** sie anorganische Verbindungen enthalten.

10. Thermoplastische Formmassen nach einem der Ansprüche 5 bis 9, **dadurch gekennzeichnet, dass** sie Polyolefine enthalten.

11. Verwendung der Homo- und/oder Copolymerisate nach Anspruch 3 zur Herstellung von Formmassen oder Formkörpern.

## Claims

1. Process for the preparation of homo- and/or copolymers of one or more ethylenically unsaturated monomers by means of emulsion and/or suspension polymerization, which contain less than 400 particles per $m^2$ of surface area with a diameter greater than 200 µm, the determination of the particles with a diameter greater than 200 µm per $m^2$ of surface area being carried out with an FS-3 film quality test apparatus from OCS GmbH, Witten, Germany, **characterized in that** the aqueous polymer stream for purification is passed into a drum sieve which rotates slowly or in cycles, with an average mesh width of ≤ 200 µm, and coarse fractions which remain are transported away from the filtration site by the rotary movement of the drum and are removed in the upper part of the drum by means of spraying under pressure by suitable rinsing media and suitable scrapers.

2. Process according to Claim I, **characterized in that** the drum sieve has an average mesh width of ≤ 150 µm.

3. Homo- and/or copolymers of one or more ethylenically unsaturated monomers, **characterized in that** they are prepared by the process according to Claim 1.

4. Homo- and/or copolymers according to Claim 3, **characterized in that** they contain less than 200 particles per $m^2$ of surface area with a diameter greater than 200 µm.

5. Thermoplastic moulding compositions **characterized in that** they comprise homo- and/or copolymers according to Claim 3.

6. Thermoplastic moulding compositions according to Claim 5, **characterized in that** they comprise graft polymers of resin-forming vinyl polymers on a rubber.

7. Thermoplastic moulding compositions according to either of Claims 5 and 6, **characterized in that** they comprise thermoplastic polycarbonates, polyester-carbonates, polyesters or mixtures thereof or polyamide.

8. Thermoplastic moulding compositions according to any one of Claims 5 to 7, **characterized in that** they comprise flameproofing agents.

9. Thermoplastic moulding compositions according to any one of Claims 5 to 8, **characterized in that** they comprise inorganic compounds.

10. Thermoplastic moulding compositions according to any one of Claims 5 to 9, **characterized in that** they comprise polyolefins.

11. Use of the homo- and/or copolymers according to Claim 3 for the preparation of moulding compositions or shaped articles.

## Revendications

1. Procédé de préparation d'homo- et/ou de copolymères d'un ou de plusieurs monomères insaturés éthyléniquement au moyen d'une polymérisation en émulsion et/ou en suspension, qui contiennent moins de 400 particules avec un diamètre supérieur à 200 µm par $m^2$ de surface, où la détermination des particules avec un diamètre supérieur à 200 µm par $m^2$ de surface a lieu avec un appareil de contrôle de qualité de feuilles FS-3 de la société OCS GmbH, Witten, Allemagne, **caractérisé en ce que** le courant de polymère aqueux à purifier est envoyé dans un

tamis à tambour mû en rotation lente ou intermittente avec une largeur de maille moyenne ≤ 200 µm et les parties grossières résiduelles étant emmenées du lieu de filtration par le mouvement tournant du tambour et étant éliminées dans la partie supérieure du tambour au moyen d'une aspersion sous pression par un milieu de rinçage approprié et des grattoirs appropriés.

2. Procédé selon la revendication 1, **caractérisé en ce que** le tamis à tambour a une largeur de maille moyenne ≤ 150 µm.

3. Homo- et/ou copolymères d'un ou de plusieurs monomères insaturés éthyléniquement, **caractérisés en ce qu'**ils sont préparés par le procédé selon la revendication 1.

4. Homo- et/ou copolymères selon la revendication 3, **caractérisés en ce qu'**ils contiennent moins de 200 particules avec un diamètre supérieur à 200 µm par $m^2$ de surface.

5. Matières moulables thermoplastiques, **caractérisées en ce qu'**elles contiennent des homo- et/ou des copolymères selon la revendication 3.

6. Matières moulables thermoplastiques selon la revendication 5, **caractérisées en ce qu'**elles contiennent des polymères greffés de polymères vinyliques formant une résine sur un caoutchouc.

7. Matières moulables thermoplastiques selon l'une des revendications 5 ou 6, **caractérisées en ce qu'**elles contiennent des polycarbonates, des polyester-carbonates, des polyesters thermoplastiques ou des mélanges de ceux-ci ou des polyamides.

8. Matières moulables thermoplastiques selon l'une des revendications 5 à 7, **caractérisées en ce qu'**elles contiennent des ignifugeants.

9. Matières moulables thermoplastiques selon l'une des revendications 5 à 8, **caractérisées en ce qu'**elles contiennent des composés inorganiques.

10. Matières moulables thermoplastiques selon l'une des revendications 5 à 9, **caractérisées en ce qu'**elles contiennent des polyoléfines.

11. Utilisation des homo- et/ou des copolymères selon la revendication 3 pour la préparation de matières moulables ou de corps moulables.

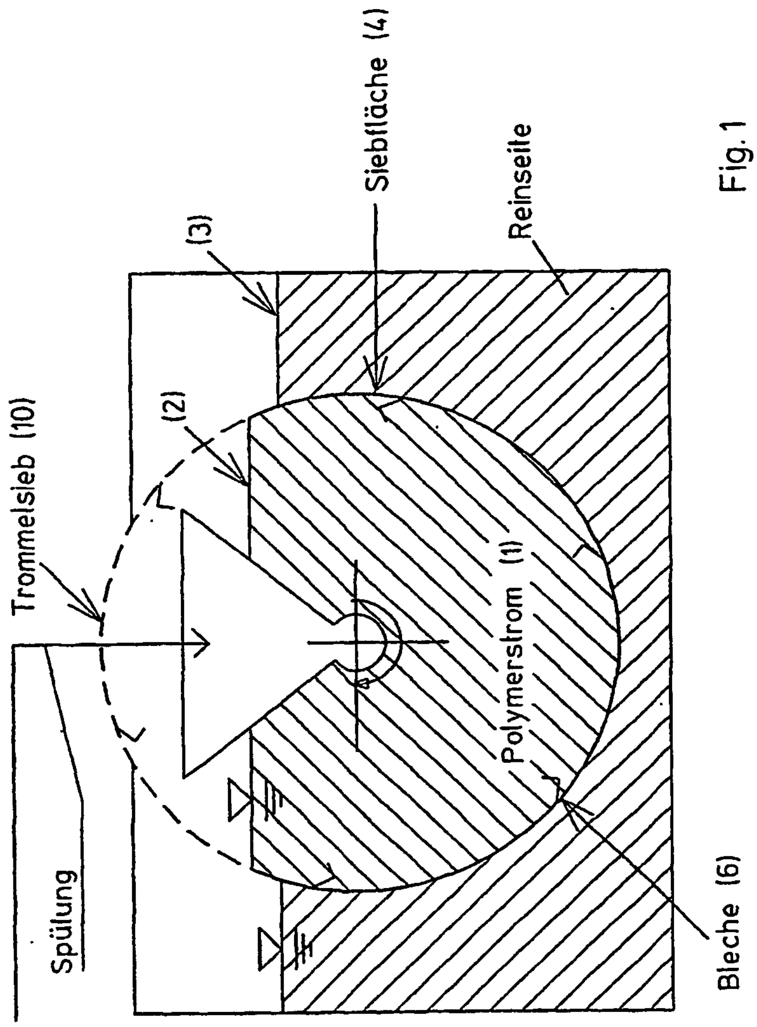
Spülung
Trommelsieb (10)
(2)
(3)
Siebfläche (4)
Reinseite
Polymerstrom (1)
Bleche (6)

Fig. 1

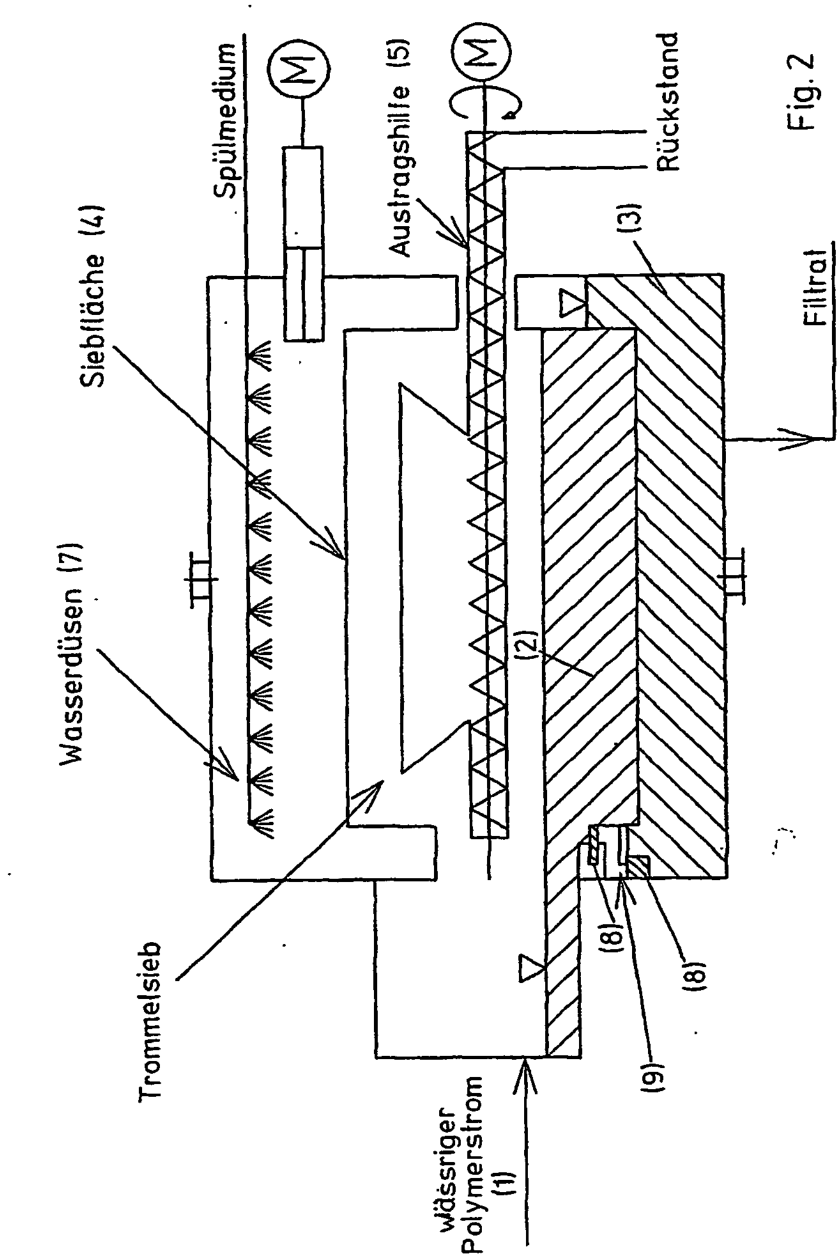
Spülmedium
M
Siebfläche (4)
Wasserdüsen (7)
Trommelsieb
Austragshilfe (5)
M
Rückstand
(3)
Filtrat
(2)
(8)
(8)
(9)
Wässriger Polymerstrom (1)

Fig. 2